# EUROPÄISCHE PATENTSCHRIFT

(11) **EP 1 132 601 B1**
(45) Veröffentlichungstag und Bekanntmachung des Hinweises auf die Patenterteilung: **21.09.2005**
(21) Anmeldenummer: 01104858.4
(22) Anmeldetag: 28.02.2001
(51) Int. Cl.: F02D 41/14, F02D 35/02, F02D 41/40, F02D 21/08

(54) **Verfahren zum Regeln der Verbrennung fossiler Brennstoffe**
Method for controlling combustion of fossil fuel
Procédé pour réguler la combustion de carburants fossiles

(30) Priorität: 10.03.2000 DE 10011622
(43) Veröffentlichungstag der Anmeldung: 12.09.2001
(73) Patentinhaber: Delphi Technologies, Inc., Troy, MI 48007 (US)
(72) Erfinder: Engel, Joseph A., 4671 Oberkorn (LU); DuFaux, Henri M.A.F., 6723 Habay-la-Vieille (BE); Glavmo, Magnus P., 8272 Mamer (LU)
(74) Vertreter: Manitz, Finsterwald & Partner GbR

(56) Entgegenhaltungen:
- EP-A- 0 260 177
- EP-A- 0 982 496
- WO-A-98/37322
- WO-A-99/61771
- US-A- 4 186 701
- US-A- 4 739 731
- US-A- 5 263 452
- PATENT ABSTRACTS OF JAPAN vol. 1995, no. 05, 30. Juni 1995 (1995-06-30) & JP 07 042592 A (SUZUKI MOTOR CORP), 10. Februar 1995 (1995-02-10)

## Beschreibung

Die Erfindung betrifft ein Verfahren zum Regeln der Verbrennung fossiler Brennstoffe, insbesondere der Verbrennung in einem Zylinder eines Verbrennungsmotors.

Es ist bekannt, die Verbrennung fossiler Brennstoffe durch Messen der Abgaszusammensetzung zu überwachen und bei Auftreten unerwünschter Abgaskomponenten, wie Stickoxiden, den Verbrennungsvorgang so zu beeinflussen, daß sich die zeitliche Änderung der während des Verbrennungsvorganges freigesetzten Wärmemenge ändert, um Spitzentemperaturen zu vermeiden, bei denen derartige Abgaskomponenten entstehen. So kann der Verbrennungsprozeß durch geeignete Maßnahmen, wie beispielsweise durch Verändern der Einfüllmenge und der Einfülldauer des fossilen Brennstoffes oder durch eine geregelte Abgasrückführung, gezielt eingestellt werden, um den Verlauf der Wärmefreisetzung während des Verbrennungsvorganges gezielt zu beeinflussen. Durch eine Kontrolle der Abgaszusammensetzung bei einem nachfolgenden Verbrennungsvorgang kann anschließend überprüft werden, ob die vorgenommenen Maßnahmen Wirkung gezeigt haben, und ob gegebenenfalls weitere Maßnahmen zur Beeinflussung der Wärmefreisetzung während der nachfolgenden Verbrennungsvorgänge erforderlich sind. Auf diese Weise kann die Verbrennung in einem gewünschten Bereich der Wärmefreisetzung geregelt werden, ohne daß dabei unerwünschte Abgaskomponenten entstehen.

Insbesondere bei Benzinmotoren und bei Dieselmotoren wird dieses bekannte Verfahren eingesetzt, um den Ablauf der einzelnen Verbrennungsvorgänge im Zylinder des Verbrennungsmotors zu überwachen und gegebenenfalls durch geeignete Maßnahmen, wie beispielsweise durch die Veränderung des Einspritzzeitpunktes, der eingespritzten Kraftstoffmenge oder des Einspritzverlaufes, die weiteren Verbrennungsvorgänge gezielt zu beeinflussen. Des weiteren wird das bekannte Verfahren dazu verwendet, die während der Verbrennungsvorgänge entstehenden Temperaturen in einem gewünschten Temperaturbereich zu halten, bei dem die verstärkte Bildung von unerwünschten Abgaskomponenten wie Stickoxiden (NOₓ) nicht auftritt, deren Bildung aus Umweltschutzgründen vermieden werden soll.

So wird insbesondere bei Verbrennungsmotoren beobachtet, daß ab einer Temperatur von etwa 2000 K während der Verbrennungsvorgänge im Zylinder verstärkt Stickoxide entstehen. Nach Erfassen der verstärkten Bildung von unerwünschten Abgaskomponenten kann mit Hilfe der zuvor beschriebenen Maßnahmen die Temperatur im Zylinder reduziert und damit die Bildung von Stickoxiden vermieden werden. Allerdings hat sich auch gezeigt, daß Verbrennungsmotoren einen um so höheren Wirkungsgrad aufweisen, je höher die Temperatur während des Verbrennungsvorgangs ist, sofern die während des Verbrennungsvorgangs entstehenden Spitzentemperaturen einen Temperaturbereich nicht übersteigen, bei dem die verstärkte Bildung von Stickoxiden gerade noch nicht auftritt.

In der WO 99/61771 wird ein Verfahren zur Regelung der Kraftstoffvoreinspritzung in Verbrennungsmotoren beschrieben. Zunächst wird unter Erzeugung eines Messwerts die Ionisierung des während der Voreinspritzung entstehenden Verbrennungsgases detektiert. Der detektierte Messwert wird dann mit einem vorbestimmten Schwellwert verglichen. Liegt der Messwert bei mehreren aufeinander folgenden Verbrennungsvorgängen über bzw. unter dem vorbestimmten Schwellwert, wird die Kraftstoffmenge für eine nachfolgende Kraftstoffvoreinspritzung in die Brennkammer inkrementell erhöht bzw. herabgesetzt.

Es ist Aufgabe der Erfindung, ein Verfahren zur Regelung der Verbrennung fossiler Brennstoffe anzugeben, mit dem ein möglichst hoher Wirkungsgrad bei der Verbrennung ohne die übermäßige Bildung schädlicher Abgase erzielt wird.

Die Erfindung löst die Aufgabe durch ein Verfahren mit den Merkmalen nach Anspruch 1.

Bei dem erfindungsgemäßen Verfahren wird mit Hilfe der Meßwerte der Anteil an Stickoxiden im Verbrennungsgas bestimmt und anschließend mit einem Grenzwert verglichen. Der Grenzwert ist bei dem erfindungsgemäßen Verfahren so definiert, daß der Verbrennungsvorgang mit einem höchstmöglichen Wirkungsgrad abläuft, ohne daß es während des Verbrennungsvorganges zu einer verstärkten Bildung von Stickoxiden im Verbrennungsgas kommt. Die Definition des Grenzwertes, der als Sollgröße für den Regelungsprozeß der Verbrennung dient, ist insbesondere bei der Anwendung des erfindungsgemäßen Verfahrens in einem Verbrennungsmotor von Interesse, bei dem, wie zuvor bereits erläutert wurde, der größtmögliche Wirkungsgrad erzielt wird, wenn der Verbrennungsmotor mit seinem Wärmefreisetzungsverlauf nahe der sogenannten Stickoxidgrenze betrieben wird, d.h. dem Temperaturbereich, bei dem gerade noch keine übermäßige Bildung von Stickoxiden entsteht.

Um den Verbrennungsvorgang nun einerseits mit möglichst hohem Wirkungsgrad betreiben zu können, andererseits die übermäßige Bildung von Stickoxiden zu vermeiden, werden bei dem erfindungsgemäßen Verfahren die ermittelten Meßwerte, die den Anteil an Stickoxid im Verbrennungsgas angeben, mit dem mindestens einen Grenzwert verglichen, der die Stickoxidgrenze definiert, bei der noch keine übermäßige Bildung von Stickoxiden auftritt. Sollte einer oder mehrere der Meßwerte den Grenzwert übersteigen, bedeutet dies, daß in dem überwachten Verbrennungsvorgang durch die Wärmefreisetzung während des Verbrennungsvorganges die Temperatur im Verbrennungsgas zumindest zeitweise einen so hohen Wert erreicht hat, daß verstärkt Stickoxide entstanden sind. In einem solchen Fall wird die Wärmefreisetzung für einen nachfolgenden Verbrennungsvorgang so eingestellt, daß die Bildung von Stickoxiden während des nachfolgenden Verbrennungsvorgangs vermindert ist. Auf diese Weise wird eine Regelung der Verbrennung durch das erfindungsgemäße Verfahren erreicht, bei der die Verbrennung möglichst nahe an der Stickoxidgrenze erfolgt, wobei einerseits ein entsprechend hoher Wirkungsgrad erzielt wird, während andererseits die übermäßige Bildung schädlicher Abgase vermieden wird.

Vorteilhafte Weiterbildungen ergeben sich aus der nachfolgenden Beschreibung, der Zeichnung, sowie den Unteransprüchen.

So wird bei einer besonders bevorzugten Ausführungsform des Verfahrens vorgeschlagen, den Wärmefreisetzungsverlauf während des nachfolgenden Verbrennungsvorganges derart zu beeinflussen, daß die Bildung von Stickoxiden gegebenenfalls verstärkt wird, wenn der Grenzwert durch die Meßwerte nicht überschritten wird. Auf diese Weise wird erreicht, daß die Regelung der Verbrennung in einem engen Regelfenster erfolgt, so daß bei einer Abnahme der Stickoxidbildung, die als Nachweis für eine Verbrennung mit vergleichsweise geringem Wirkungsgrad zu verstehen ist, die Verbrennung wieder mit einer höheren Wärmefreisetzung erfolgt, wodurch der Wirkungsgrad der Verbrennung verbessert wird. Nimmt dagegen der Anteil an Stickoxiden im Verbrennungsgas übermäßig zu, wird die Verbrennung so geregelt, daß bei dem nachfolgenden Verbrennungsvorgang eine verminderte Bildung von Stickoxiden erreicht wird.

Um insbesondere bei Anwendung des Verfahrens bei Verbrennungsmotoren eine möglichst gleichmäßige Leistungsabgabe des Verbrennungsmotors zu erzielen, wird ferner vorgeschlagen anstelle nur eines einzelnen Grenzwertes eine Folge von Grenzwerten bereitzustellen, mit der die Folge von Meßwerten verglichen wird, wobei eine zunehmende Abweichung der Folge von Meßwerten von der Folge von Grenzwerten auf eine zu starke oder eine zu schwache Bildung von Stickoxiden hinweist.

Die Folge von Meßwerten entspricht vorzugsweise eine Folge von ersten Leitfähigkeitswerten des während des Verbrennungsvorganges entstehenden Verbrennungsgases, die insbesondere auf Grundlage der im Verbrennungsgas enthaltenen negativ geladenen Teilchen gebildet wird. Mit Hilfe dieses Meßprinzips, bei dem die negativ geladenen Teilchen im Verbrennungsgas ermittelt werden, kann die Bildung von Stickoxiden eindeutig bestimmt werden, da während der übermäßigen Bildung von Stickoxiden ab einer Temperatur von etwa 2000 K der Anteil an negativ geladenen Stickstoffmolekülen und Sauerstoffmolekülen stark zunimmt, der von der für die Messung verwendeten Meßeinrichtung problemlos erfaßt werden kann.

Die Folge von Grenzwerten entspricht bei einer bevorzugten Ausführungsform des Verfahrens einer Folge von zweiten Leitfähigkeitswerten des während des Verbrennungsvorganges entstehenden Verbrennungsgases, die auf Grundlage der im Verbrennungsgas enthaltenen positiv geladenen Teilchen gebildet wird.

Wie sich in Versuchsreihen gezeigt hat, besteht bei Temperaturen im Verbrennungsgas, die unterhalb des Temperaturbereichs liegen, bei dem verstärkt Stickoxide entstehen, zumindest annähernd ein Gleichgewicht zwischen dem Gehalt an negativ geladenen Teilchen und dem Gehalt an positiv geladenen Teilchen. Bei zunehmender Verbrennungstemperatur nimmt ab einem Temperaturwert von etwa 2000 K durch die plötzliche Aufspaltung von Stickstoffmolekülen und Sauerstoffmolekülen der Gehalt an negativ geladenen Teilchen im Verbrennungsgas zu, während der Anteil an positiv geladenen Teilchen im Verbrennungsgas in etwa konstant bleibt oder gegebenenfalls sogar abnimmt. Folglich entspricht die Folge von Meßwerten, die den Anteil an negativ geladenen Teilchen im Verbrennungsgas angibt, bei niedrigen Temperaturen zumindest annähernd der Folge von Grenzwerten, die den Anteil an positiv geladenen Teilchen im Verbrennungsgas zeigt, während die beiden Folgen bei hohen Temperaturen, bei denen eine verstärkte Bildung von Stickoxiden auftritt, voneinander abweichen. Auf diese Weise kann vergleichsweise einfach eine unerwünschte Bildung von Stickoxiden ermittelt werden.

Hierbei ist ferner zu bemerken, daß die Messung der Leitfähigkeit im Verbrennungsgas durch vergleichsweise geringen technischen Aufwand möglich ist, so daß bei Anwendung des Verfahrens in einem Verbrennungsmotor gegebenenfalls bei jedem Zylinder selektiv die Stickoxidbildung bestimmt und die Wärmefreisetzung geregelt werden kann.

Des weiteren wird vorgeschlagen, die Folge von Grenzwerten auch aus einer Vielzahl von gespeicherten Grenzwerten in Abhängigkeit von den Randbedingungen des Verbrennungsvorgangs auszuwählen, während dem die Folge von Meßwerten bestimmt wird bzw. wurde.

Bei einer alternativen Ausführungsform des Verfahrens wird der Anteil an Stickoxiden während des überwachten Verbrennungsvorganges durch einen Stickoxide erfassenden Sensor bestimmt, der den während des Verbrennungsvorgangs erfaßten Anteil an Stickoxiden als Folge von Meßwerten ausgibt.

Der Wärmefreisetzungsverlauf wird vorzugsweise durch gezielte Kühlung des Verbrennungsraums, durch Veränderung der Einfüllmenge und/oder der Einfülldauer des fossilen Brennstoffes und/oder durch Abgasrückführung beeinflußt.

Nachfolgend wird die Erfindung anhand eines Ausführungsbeispieles unter Bezugnahme auf die Zeichnung näher erläutert. Darin zeigen:
- Fig. 1: ein Diagramm, in dem zwei im Zylinder eines Verbrennungsmotors aufgenommene Leitfähigkeit-Meßsignalkurven bezogen auf den Kurbelwellenwinkel des Verbrennungsmotors gezeigt sind, und
- Fig. 2: ein Diagramm, in dem eine im Zylinder des Verbrennungsmotors aufgenommene Leitfähigkeits-Meßsignalkurve im Vergleich zu einer Grenzwertkurve bezogen auf den Kurbelwellenwinkel des Verbrennungsmotors gezeigt ist.

Bei dem nachfolgend beschriebenen Ausführungsbeispiel wird das erfindungsgemäße Verfahren bei einem Dieselmotor eingesetzt. Der Anteil an Stickoxiden im Verbrennungsgas wir durch Messen der Leitfähigkeit des Verbrennungsgases bestimmt, wobei ein Meßverfahren angewandt wird, bei dem zunächst die negativ geladenen Teilchen im Verbrennungsgas erfaßt werden.

Zum Messen der Leitfähigkeit des im Zylinder befindlichen Verbrennungsgases wird eine Glühkerze des jeweiligen Zylinders des Dieselmotors verwendet. Die Glühkerze des jeweiligen Zylinders ist mit einem Referenzwiderstand in Reihe geschaltet und mit der Innenwand des Zylinders leitend verbunden. Zur Bestimmung der Leitfähigkeit des Verbrennungsgases im jeweiligen Zylinder auf Grundlage der im Verbrennungsgas enthaltenen negativ geladenen Teilchen wird an die Glühkerze während eines Teils des Verdichtungshubes und eines Teils des Arbeitshubes eine positive Spannung angelegt. Durch die während des Verbrennungsprozesses entstehenden negativ geladenen Teilchen ändert sich die Leitfähigkeit des Verbrennungsgases zwischen der Glühkerze und der Innenwand des Zylinders wodurch sich die am Referenzwiderstand anliegende Spannung ändert, die gemessen und zur Auswertung verstärkt wird. Die verschiedenen Spannungswerte werden als Folge von Meßwerten in einem Speicher abgespeichert.

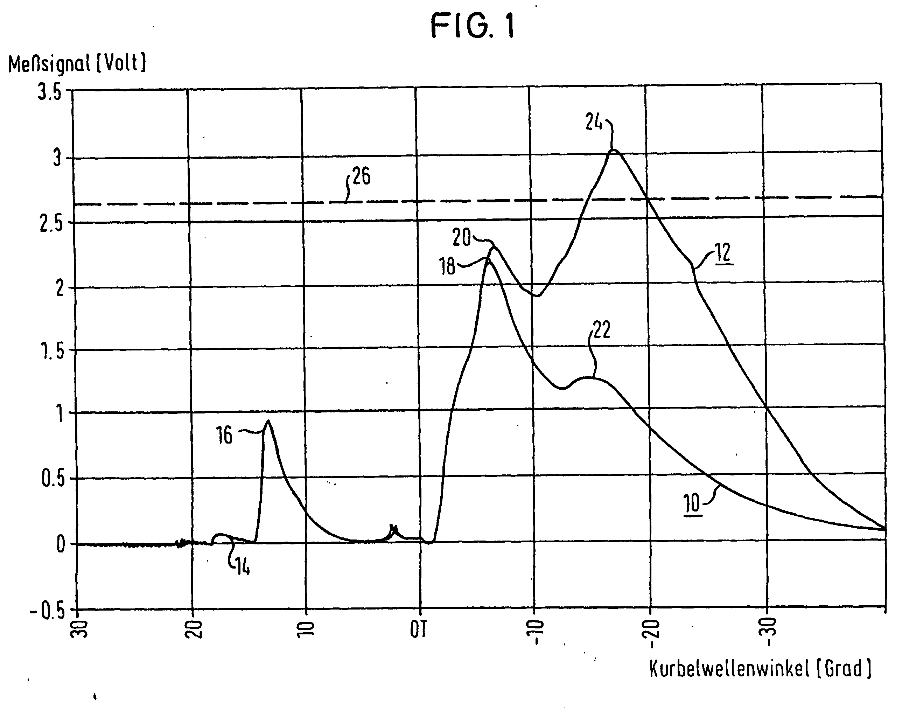

Wird nun während des Verbrennungsvorgangs eine Wärmemenge freigesetzt, bei der die maximal entstehende Temperatur unterhalb etwa 2000 K bleibt, kommt es während der Verbrennung zu keiner übermäßigen Bildung von Stickoxiden, so daß die Leitfähigkeit des Verbrennungsgases betrachtet über den Verbrennungsvorgang im Zylinder nur einen vergleichsweise geringen Anstieg der Leitfähigkeit während es gesamten Verbrennungsvorganges zeigt. In Fig. 1 ist eine erste Meßsignalkurve 10 für einen derartigen Verbrennungsvorgang dargestellt, die die Änderung der Leitfähigkeit des Verbrennungsgases zwischen einem Kurbelwellenwinkel von etwa 30° vor dem oberen Totpunkt OT des Kolbens bis zu einem Kurbelwellenwinkel von etwa -40° nach dem oberen Totpunkt OT des Kolbens zeigt.

Kommt es dagegen während des Verbrennungsvorgangs zumindest zeitweise zu einer sehr hohen Wärmemengeabgabe, beispielsweise, wenn sich der Kolben unmittelbar nach dem oberen Totpunkt OT in seinem Arbeitshub befindet, können die Spitzentemperaturen über eine Temperatur von 2000 K steigen, wodurch eine übermäßig starke Bildung von Stickoxiden auftritt, die zu einer deutlich erkennbaren Erhöhung der Leitfähgikeit des Verbrennungsgases führt. Die bei einem ungünstigen Verlauf der Wärmefreisetzung im Zylinder ermittelten Meßwerte zeigt eine in Fig. 1 dargestellte zweite Meßsignalkurve 12.

Wie die beiden Meßsignalkurven 10 und 12 zeigen, verlaufen sie zu Beginn des jeweils betrachteten Verbrennungsvorganges zumindest annähernd identisch. Zu Beginn des Überwachungszeitraumes bei einem Kurbelwellenwinkel von etwa 30° vor dem oberen Totpunkt OT des Kolbens zeigen die beiden Meßsignalkurven 10 und 12 einen Wert von etwa 0 Volt. Ab einem Kurbelwellenwinkel von etwa 20° vor dem oberen Totpunkt OT des Kolbens beginnt die Motorsteuerung des Dieselmotors mit einer Voreinspritzung, bei der eine geringe Menge Dieselkraftstoff in den Zylinder eingespritzt wird, um das Innere des Zylinders vor der eigentlichen Haupteinspritzung zu erwärmen. Dies zeigt sich in den beiden Meßsignalkurven 10 und 12 zunächst durch die kleinen Signalschwankungen 14 im Signalverlauf.

Ab einem Kurbelwellenwinkel von etwa 14° vor dem oberen Totpunkt OT entzündet sich der im Zylinder befindliche Kraftstoff, wodurch die Leitfähigkeit des Abgases zunimmt, wie den beiden Meßsignalkurven 10 und 12 durch die erste Signalspitze 16 zu entnehmen ist. Die Signalspitze 16 der beiden Meßsignalkurven 10 und 12 flacht nach einem plötzlichen Anstieg mit sehr steiler Flanke kontinuierlich wieder ab, bis sie bei einem Kurbelwellenwinkel von etwa 5° vor dem oberen Totpunkt OT etwa wieder 0 Volt zeigt. Etwa während dieses Zeitpunktes wird die eigentliche Haupteinspritzung des Kraftstoffes in den Zylinder vorgenommen. Durch die Voreinspritzung wurde, wie zuvor bereits erläutert, der Innenraum des Zylinders vorgewärmt, so daß der während der Haupteinspritzung eingespritzte Kraftstoff zumindest teilweise verdampft und sich gleichmäßig im Innenraum des Zylinders verteilt. Bei einem Kurbelwellenwinkel von etwa -2° nach dem oberen Totpunkt OT des Kolbens entzündet sich der Kraftstoff im Inneren des Zylinders, wodurch sich die Leitfähigkeit des Verbrennungsgases verändert, wie die beiden zweiten Signalspitzen 18 und 20 in den Meßsignalkurven 10 und 12 zeigen, die ihr Maximum bei einem Kurbelwellenwinkel von etwa -7° bezogen auf den oberen Totpunkt OT des Kolbens besitzen. Bis zu diesem Zeitpunkt verlaufen die erste Meßsignalkurve 10 und die zweite Meßsignalkurve 12 bis auf kleinere Abweichungen zumindest annähernd identisch.

Wird nun die Temperatur von 2000 K, bei der eine verstärkte Bildung von Stickoxiden auftritt, während des Verbrennungsvorgangs nicht erreicht, ändert sich die Leitfähigkeit entsprechend dem Verlauf der ersten Meßsignalkurve 10. Die erste Meßsignalkurve 10 steigt zunächst auf einen Wert von etwa 2,2 Volt, wie durch die zweiten Signalspitze 18 gezeigt wird. Anschließend fällt die erste Meßsignalkurve 10 unter Bildung einer dritten Signalspitze 22 mit einem Wert von etwa 1,2 Volt bei einem Kurbelwellenwinkel von etwa -15° bezogen auf den oberen Totpunkt OT des Kolbens sanft ab, bis sie bei einem Kurbelwellenwinkel von etwa -40° bezogen auf den oberen Totpunkt OT des Kolbens gleichfalls zumindest annähernd 0 Volt erreicht.

Liegt dagegen die Temperatur im Inneren des Zylinders über 2000 K, kommt es zu einer verstärkten Bildung von Stickoxiden im Verbrennungsgas. Durch die verstärkte Bildung von Stickoxiden kommt es zu einer Zunahme der Leitfähigkeit im Verbrennungsgas, die ihrerseits zu einem Anstieg des Kurvenverlaufes nach der zweiten Signalspitze 20 führt, wie der Verlauf der zweiten Meßsignalkurve 12 zeigt. So nimmt der Verlauf der zweiten Meßsignalkurve 12 nach der zweiten Signalspitze 20 noch einmal zu und zeigt eine dritte Signalspitze 24, deren Maximum bei einem Kurbelwellenwinkel von etwa -17° bezogen auf den oberen Totpunkt OT bei etwa 3 Volt liegt. Nach Erreichen dieser dritten Signalspitze 24 fällt das Signal kontinuierlich ab, bis es bei einem Kurbelwellenwinkel von etwa -40° bezogen auf den oberen Totpunkt OT des Kolbens etwa 0 Volt zeigt.

Wie zuvor bereits erläutert, zeigt der Dieselmotor den höchsten Wirkungsgrad, wenn er während des Verbrennungsvorganges so betrieben wird, daß seine Wärmefreisetzung möglichst maximal ist, ohne daß dabei jedoch Spitzentemperaturen entstehen, die eine Temperatur von 2000 K übersteigen, bei der eine verstärkte Bildung von unerwünschten Abgaskomponenten, insbesondere von Stickoxiden auftritt. Um den Dieselmotor mit möglichst hohem Wirkungsgrad betreiben zu können, wird bei dem erfindungsgemäßen Verfahren eine Stickoxidgrenze definiert, die durch einen konstanten, abgespeicherten Grenzwert 26 in Fig. 1 dargestellt ist, der im vorliegenden Fall bei 2,7 Volt liegt und der im Rahmen von Testreihen bzw. durch empirische Auswertungen ermittelt worden ist. Durch die Messung der Leitfähigkeit des Verbrennungsgases auf Grundlage der im Verbrennungsgas enthaltenen negativ geladenen Teilchen werden während der Messung der Leitfähigkeit insbesondere negativ geladene Stickstoffionen und negativ geladene Sauerstoffionen erfaßt.

Wird der Dieselmotor so betrieben, daß die maximal entstehenden Spitzentemperaturen während der Wärmefreisetzung unterhalb einer Temperatur von etwa 2000 K liegt, kommt es zu keiner verstärkten Bildung negativ geladener Teilchen im Verbrennungsgas und die Leitfähigkeit des Verbrennungsgases betrachtet über den Kurbelwellenwinkel zeigt beispielsweise den Verlauf der ersten Meßsignalkurve 10.

Wird dagegen der Dieselmotor so betrieben, daß die Wärmefreisetzung im Zylinder zu Spitzentemperaturen führt, die oberhalb einer Temperatur von 2000 K liegen, kommt es schlagartig zu einer verstärkten Bildung von negativ geladenen Stickstoffionen und negativ geladenen Sauerstoffionen, die die gemessene Leitfähigkeit des Verbrennungsgases erhöhen. Ein derartiger Verlauf ist beispielsweise durch die zweite Meßsignalkurve 12 in Fig. 1 gezeigt.

Damit der Dieselmotor nun einerseits mit einem sehr hohen Wirkungsgrad betrieben wird, andererseits jedoch die Bildung von unerwünschten Abgaskomponenten verhindert sein soll, vergleicht die Motorregelung des Dieselmotors kontinuierlich bzw. nach einem vorgegebenen Schema die durch die Meßeinrichtung ermittelten Meßwerte, auf deren Grundlage beispielsweise die beiden Meßsignalkurven 10 und 12 erstellt worden sind.

Übersteigt keiner der bestimmten Meßwerte den Grenzwert 26, bedeutet dies, daß der Dieselmotor bei seinem Betrieb eine Wärmefreisetzung zeigt, bei der keine Spitzentemperaturen entstehen, die oberhalb einer Temperatur von 2000 K liegen. Damit der Dieselmotor nun mit einer möglichst hohen Leistung betrieben werden kann, wird die Motorregelung in einem solchen Fall durch geeignete Maßnahmen, wie beispielsweise die Erhöhung der Einspritzmenge des Kraftstoffs, der Veränderung der Einspritzdauer, der Erhöhnung oder der Verdichtung der zugeführten Luftmenge oder der Erhöhung der Einspritzmenge bei der Voreinspritzung, den nachfolgenden Verbrennungsvorgang so regeln, daß sich die während des nachfolgenden Verbrennungsvorgangs freigesetzte Wärmemenge und damit die Leistung im Zylinder erhöht.

Stellt die Motorregelung dagegen fest, daß zumindest einer der Meßwerte den Grenzwert 26 überschreitet, bedeutet dies, daß der Dieselmotor während des überwachten Verbrennungsvorganges eine Wärmefreisetzung gezeigt hat, bei der Spitzentemperaturen entstanden sind, die oberhalb einer Temperatur von 2000 K lagen, wodurch eine verstärkte Bildung von Stickoxiden im Verbrennungsgas entstanden ist. Als Konsequenz wird die Motorregelung die Wärmefreisetzung des nachfolgenden Verbrennungsvorganges durch verschiedene Maßnahmen reduzieren. So kann die Motorregelung beispielsweise den Einspritzzeitpunkt der Voreinspritzung auf einen früheren Zeitpunkt bezogen auf den oberen Totpunkt des Kolbens verschieben oder die während der Haupteinspritzung eingespritzte Menge an Kraftstoff, den Einspritzzeitpunkt der Haupteinspritzung oder auch den Verlauf der Kraftstoffeinspritzung entsprechend verändern. Eine weitere Möglichkeit besteht darin, durch eine geregelte Zufuhr von Abgas in den Zylinder die Wärmefreisetzung zu reduzieren und dadurch die verstärkte Bildung von Stickoxiden zu verhindern. Ferner besteht die Möglichkeit, durch Erhöhung der Kühlleistung des Kühlmittels, beispielsweise indem die Pumpenleistung der Wasserpumpe, die das Kühlmittel durch den Motor zum Kühlen fördert, zu erhöhen, um die im Motorblock gespeicherte Wärme abzuführen. Ferner besteht noch die Möglichkeit, die Zufuhr von Luft zu drosseln.

Nachdem die Motorsteuerung eine oder mehrere dieser Maßnahmen vorgenommen hat, wird in einem nachfolgenden Verbrennungsvorgang erneut eine Leitfähigkeitsmessung durchgeführt, in der überprüft wird, ob während des nachfolgenden Verbrennungsvorganges keine derartigen Spitzentemperaturen, die die Bildung von Stickoxiden erhöhen, entstanden sind.

Sollte sich während der nachfolgenden Leitfähigkeitsmessung herausstellen, daß der Grenzwert 26 von den Meßwerten nicht mehr überschritten wird, erhöht die Motorsteuerung erneut die Leistung im Zylinder des Dieselmotors, wie zuvor unter Bezugnahme auf die erste Meßsignalkurve 10 erläutert wurde. Übersteigt dagegen einer der Meßwerte erneut den Grenzwert 26 reduziert die Motorregelung die Leistung des Zylinders weiter.

Auf die zuvor beschriebene Weise wird der Dieselmotor in einem engen Regelfenster betrieben, bei dem der Dieselmotor einerseits mit hohem Wirkungsgrad gefahren wird, andererseits jedoch die unerwünschte, verstärkte Bildung von Stickoxiden zumindest annähernd vermieden wird.

Zur Kontrolle des Motorbetriebes ist es ferner denkbar, eine Referenzkurve 28 als Grenzwertkurve vorzugeben, die aus einer Vielzahl abgespeicherter Referenzwerte zusammengesetzt ist. Die Referenzwerte werden entsprechend den Betriebsbedingungen des Dieselmotors zur Bildung der Referenzkurve 28 aus einer abgespeicherten Tabelle ausgelesen.

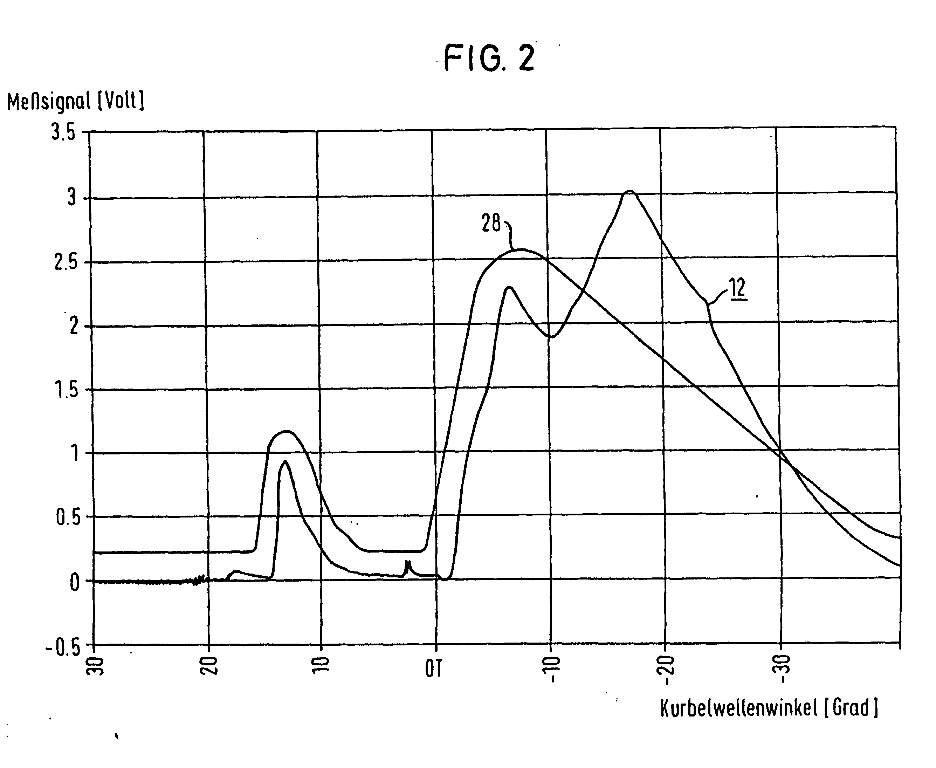

Eine derartige Referenzkurve 28 ist in dem in Fig. 2 gezeigten Diagramm dargestellt. Des weiteren ist in dem Diagramm die zweite Meßsignalkurve 12 zur Verdeutlichung gezeigt. Zu Beginn des Verbrennungsvorgangs zeigen die Meßsignalkurve 10 und die Referenzkurve 28 einen zumindest annähernd identischen Verlauf, sofern die während des Verbrennungsvorganges entstehenden Spitzentemperaturen während des Verbrennungsvorganges unter einem Wert von 2000 K liegen, wobei die Referenzkurve 28 etwas bezüglich der Rechtswertachse verschoben ist. Steigt dagegen die Spitzentemperatur während des Verbrennungsvorganges über 2000 K, die eine verstärkte Bildung von Stickoxiden im Verbrennungsgas zur Folge hat, weicht die Meßsignalkurve 12 in ihrem Verlauf deutlich von dem Verlauf der Referenzkurve 28 ab, wie in Fig. 2 gezeigt ist. Die Motorregelung kann in einem solchen Fall die zuvor beschriebenen Maßnahmen zur Verringerung der während der nachfolgenden Verbrennungsvorgänge entstehenden Temperaturen durchführen.

Des weiteren ist es auch denkbar, die Referenzkurve 28 durch eine Kurve zu ersetzen, die aus während eines optimierten Motorbetriebes ermittelten Leitfähigkeitswerten gebildet ist, welche auf Grundlage der positiv geladenen Teilchen im Verbrennungsgas gebildet ist. Wie sich in Versuchsreihen gezeigt hat, zeigen die auf diese Weise ermittelten Meßwerte einen Verlauf, bei dem die Entstehung von Stickoxiden das Meßsignal nicht stört. Diese auf dem Anteil an positiv geladenen Teilchen basierende Referenzkurve kann dann als Grenzwertkurve für die während der Leitfähigkeitmessung ermittelten Meßwerte dienen, die auf Grundlage der negativ geladenen Teilchen im Verbrennungsgas ermittelt worden ist.

Aufgrund dieser Tatsache ist es auch möglich, eine unerwünschte verstärkte Bildung von Stickoxiden zu erfassen, indem ein plötzliches Abweichen der Leitfähigkeitswerte, die auf Grundlage negativ geladener Teilchen im Verbrennungsgas erfaßt worden sind, von einer Folge von Leitfähigkeitswerten, die auf Grundlage positiv geladener Teilchen im Verbrennungsgas ermittelt wird. Diese Abweichung kann als Nachweis für eine verstärkte Bildung von Stickoxiden im Verbrennungsgas von der Motorregelung verwendet werden, wodurch sich eine zusätzliche Kontrolle des Verbrennungsvorganges ergibt.

### Bezugszeichenliste

- 10: erste Meßsignalkurve
- 12: zweite Meßsignalkurve
- 14: Signalschwankungen
- 16: erste Signalspitze der Meßsignalkurven
- 18: zweite Signalspitze der ersten Meßsignalkurve
- 20: zweite Signalspitze der zweiten Meßsignalkurve
- 22: dritte Signalspitze der ersten Meßsignalkurve
- 24: dritte Signalspitze der zweiten Meßsignalkurve
- 26: Grenzwert
- 28: Referenzkurve

## Patentansprüche

1. Verfahren zum Regeln der Verbrennung fossiler Brennstoffe mit einer Voreinspritzung und einer Haupteinspritzung, insbesondere der Verbrennung fossiler Brennstoffe in einem Zylinder eines Verbrennungsmotors, wobei bei dem Verfahren
zumindest während eines Verbrennungsvorgangs eine Folge von Meßwerten gebildet wird, die die vom Wärmefreisetzungsverlauf während des überwachten Verbrennungsvorganges abhängige Bildung von Stickoxiden anzeigt,
die der Haupteinspritzung zugeordneten Meßwerte anschließend mit mindestens einem Grenzwert verglichen werden, der einem während eines Verbrennungsvorganges mit zumindest annähernd optimalen Wärmefreisetzungsverlauf entstehenden Anteil an Stickoxiden entspricht, und
bei Übersteigen des Grenzwertes durch den von den Meßwerten angezeigten Anteil an Stickoxiden bei einem dem überwachten Verbrennungsvorgang nachfolgenden Verbrennungsvorgang der Wärmefreisetzungsverlauf derart beeinflußt wird, daß die Bildung von Stickoxiden während des nachfolgenden Verbrennungsvorganges vermindert ist.

2. Verfahren nach Anspruch 1, bei dem, wenn der Grenzwert nicht überschritten wird, der Wärmefreisetzungsverlauf während des nachfolgenden Verbrennungsvorganges derart beeinflußt wird, daß die Bildung von Stickoxiden gegebenenfalls verstärkt wird.

3. Verfahren nach Anspruch 1 oder 2, bei dem die Folge von Meßwerten mit einer Folge von Grenzwerten verglichen wird, wobei eine zunehmende Abweichung der Folge von Meßwerten von der Folge von Grenzwerten auf eine zu starke bzw. zu geringe Bildung von Stickoxiden hinweist.

4. Verfahren nach Anspruch 1, 2 oder 3, bei dem bei einer Abweichung der Folge von Meßwerten von der Folge von Grenzwerten über eine zulässige Toleranz der Wärmefreisetzungsverlauf für den nachfolgenden Verbrennungsvorgang derart beeinflußt wird, daß bei einer verstärkten Bildung von Stickoxiden der Wärmefreisetzungsverlauf während des nachfolgenden Verbrennungsvorgangs eine reduzierte Bildung von Stickoxiden bewirkt, und daß bei einer verminderten Bildung von Stickoxiden der Wärmefreisetzungsverlauf während des nachfolgenden Verbrennungsvorgangs eine verstärkte Bildung von Stickoxiden bewirkt.

5. Verfahren nach einem der vorhergehenden Ansprüche, bei dem die Folge von Meßwerten einer Folge von ersten Leitfähigkeitswerten des während des Verbrennungsvorganges entstehenden Verbrennungsgases entspricht, die vorzugsweise auf Grundlage der im Verbrennungsgas enthaltenen negativ geladenen Teilchen gebildet wird.

6. Verfahren nach einem der vorhergehenden Ansprüche, bei dem eine Folge von Grenzwerten zum Vergleich mit der Folge von Meßwerten vorgegeben ist, wobei zum Vergleich der beiden Folgen der Reihe nach jeweils ein Meßwert mit einem Grenzwert verglichen wird, wobei die beiden jeweils miteinander zu vergleichenden Werte bei zumindest annähernd identischen Randbedingungen des Verbrennungsvorganges aufgetreten sind.

7. Verfahren nach Anspruch 6, bei dem die Folge von Grenzwerten einer Folge von zweiten Leitfähigkeitswerten des während des Verbrennungsvorganges entstehenden Verbrennungsgases entspricht, die auf Grundlage der im Verbrennungsgas enthaltenen positiv geladenen Teilchen gebildet wird.

8. Verfahren nach Anspruch 6, bei dem die Folge von Grenzwerten aus einer Vielzahl von gespeicherten Grenzwerten in Abhängigkeit von den Randbedingungen des Verbrennungsvorgangs ausgewählt wird, während dem die Folge von Meßwerten bestimmt wird bzw. wurde.

9. Verfahren nach einem der vorhergehenden Ansprüche, bei dem der Anteil an Stickoxiden während des überwachten Verbrennungsvorganges durch einen Stickoxide erfassenden Sensor bestimmt wird, der den während des Verbrennungsvorgangs erfaßten Anteil an Stickoxiden als Folge von Meßwerten ausgibt.

10. Verfahren nach einem der vorhergehenden Ansprüche, bei dem die Leitfähigkeit des während des nachfolgenden Verbrennungsvorganges entstehenden Verbrennungsgases bestimmt wird, und bei dem die während des nachfolgenden Verbrennungsvorganges ermittelten Leitfähigkeitswerte zur Kontrolle mit dem Grenzwert bzw. der Folge von Grenzwerten verglichen werden.

11. Verfahren nach Anspruch 10, bei dem die während des nachfolgenden Verbrennungsvorganges ermittelten Leitfähigkeitswerte auf Grundlage der Bestimmung des Anteils an positiv geladenen Teilchen im Verbrennungsgas ermittelt wurden.

12. Verfahren nach einem der vorhergehenden Ansprüche, bei dem der Wärmefreisetzungsverlauf durch gezielte Kühlung des Verbrennungsraums, durch Veränderung der Einfüllmenge und/oder der Einfülldauer des fossilen Brennstoffes und/oder durch Abgasrückführung beeinflußt wird.

13. Verfahren nach einem der vorhergehenden Ansprüche, bei dem für zumindest einen der Zylinder eines Verbrennungsmotors die Meßwerte während eines Verbrennungsvorganges im Zylinder erfaßt werden.

14. Verfahren nach Anspruch 13, bei dem zum Beeinflussen des Wärmefreisetzungsverlaufes im Zylinder der Einspritzzeitpunkt, die eingespritzte Menge an Kraftstoff und/oder der Einspritzverlauf verändert wird.

15. Verfahren nach Anspruch 13 oder 14, bei dem zum Beeinflussen des Wäremfreisetzungsverlaufes im Zylinder der Zylinder gekühlt wird.

16. Verfahren nach Anspruch 13, 14 oder 15, bei dem zum Beeinflussen des Wäremfreisetzungsverlaufes im Zylinder Abgas, das bei einem vorausgegangenen Verbrennungsvorgang entstanden ist, zumindest teilweise wieder zurück in den Zylinder geleitet wird.

17. Verfahren nach einem der vorhergehenden Ansprüche, bei dem die der Voreinspritzung und der Haupteinspritzung zugeordneten Messwerte mit einer Folge von Grenzwerten verglichen werden.

## Claims

1. Method for regulating the combustion of fossil fuels using a pre-injection and a main injection, in particular the combustion of fossil fuels in a cylinder of an internal combustion engine, wherein during the method, at least during a combustion process, a succession of measured values is formed, which indicates the formation of nitrogen oxides which is dependent on the course of heat release during the monitored combustion process, the measured values assigned to the main injection are then compared with at least one limiting value which corresponds to a proportion of nitrogen oxides being produced during a combustion process with at least approximately optimum course of heat release, and when exceeding the limiting value, the course of heat released is influenced by the proportion of nitrogen oxides indicated by the measured values during a combustion process subsequent to the monitored combustion process such that the formation of nitrogen oxides is reduced during the subsequent combustion process.

2. Method according to claim 1, in which, if the limiting value is not exceeded, the course of heat release during the subsequent combustion process is influenced such that the formation of nitrogen oxides is optionally increased.

3. Method according to claim 1 or 2, in which the succession of measured values is compared with a succession of limiting values, wherein an increasing deviation of the succession of measured values from the succession of limiting values points to a too great or too low formation of nitrogen oxides.

4. Method according to claim 1, 2 or 3, in which for a deviation of the succession of measured values from the succession of limiting values above an admissible tolerance, the course of heat release for the subsequent combustion process is influenced such that for an increased formation of nitrogen oxides, the course of heat release during the subsequent combustion process effects a reduced formation of nitrogen oxides, and such that for a reduced formation of nitrogen oxides, the course of heat release during the subsequent combustion process effects an increased formation of nitrogen oxides.

5. Method according to one of the preceding claims, in which the succession of measured values corresponds to a succession of first conductivity values of the combustion gas being produced during the combustion process, and which is preferably formed on the basis of the negatively charged particles present in the combustion gas.

6. Method according to one of the preceding claims, in which a succession of limiting values is preset for comparison with the succession of measured values, wherein for comparison of the two successions according to the series, in each case a measured value is compared with a limiting value, wherein the two values to be compared with one another in each case have occurred under at least approximately identical limiting conditions of the combustion process.

7. Method according to claim 6, in which the succession of limiting values corresponds to a succession of second conductivity values of the combustion gas being produced during the combustion process, and which is formed on the basis of the positively charged particles present in the combustion gas.

8. Method according to claim 6, in which a succession of limiting values is selected from a plurality of stored limiting values as a function of the limiting conditions of the combustion process, during which the succession of measured values is or was determined.

9. Method according to one of the preceding claims, in which the proportion of nitrogen oxides during the monitored combustion process is determined by a sensor which records nitrogen oxides, and emits the proportion of nitrogen oxides recorded during the combustion process as a succession of measured values.

10. Method according to one of the preceding claims, in which the conductivity of the combustion gas being produced during the subsequent combustion process is determined, and in which the conductivity values ascertained during the subsequent combustion process are compared with the limiting value or the succession of limiting values for control.

11. Method according to claim 10, in which the conductivity values ascertained during the subsequent combustion process were determined on the basis of determination of the proportion of positively charged particles in the combustion gas.

12. Method according to one of the preceding claims, in which the course of heat release is influenced by specific cooling of the combustion chamber, by changing the quantity added and/or the period of addition of the fossil fuel and/or by waste gas return.

13. Method according to one of the preceding claims, in which the measured values during a combustion process in the cylinder are recorded for at least one of the cylinders of an internal combustion engine.

14. Method according to claim 13, in which, to influence the course of heat release in the cylinder, the point in time of injection, the quantity of fuel injected and/or the course of injection is changed.

15. Method according to claim 13 or 14, in which, to influence the course of heat release in the cylinder, the cylinder is cooled.

16. Method according to claim 13, 14 or 15, in which, to influence the course of heat release in the cylinder, waste gas, which is produced during a preceding combustion process, is passed at least partly back again to the cylinder.

17. Method according to one of the preceding claims, in which the measured values assigned to the pre-injection and the main injection are compared with a succession of limiting values.

## Revendications

1. Procédé de régulation de la combustion de carburants fossiles avec une pré-injection et une injection principale, en particulier de la combustion de carburants fossiles dans un cylindre d'un moteur à combustion interne, où, au cours dudit procédé, on établit, au moins pendant un cycle de combustion, une séquence de valeurs mesurées qui indique la formation d'oxydes d'azote fonction de la courbe de dégagement de chaleur pendant le cycle de combustion surveillé.
On compare ensuite les valeurs mesurées associées à la combustion principale à au moins une valeur limite qui correspond à une part d'oxydes d'azote produite pendant un cycle de combustion présentant une courbe de dégagement de chaleur sensiblement optimal, et
en cas de dépassement de la valeur limite par la part d'oxydes d'azote indiquée par les valeurs mesurées, on agit lors d'un cycle de combustion suivant le cycle de combustion surveillé sur la courbe de dégagement de chaleur pour que la formation d'oxydes d'azote soit réduite pendant ce cycle de combustion suivant.

2. Procédé selon la revendication 1, dans lequel, si la valeur limite n'est pas dépassée, on agit sur la courbe de dégagement de chaleur pendant le cycle de combustion suivant de manière à amplifier, le cas échéant, la formation d'oxydes d'azote.

3. Procédé selon les revendications 1 ou 2, dans lequel la séquence de valeurs mesurées est comparée à une séquence de valeurs limites, une différence croissante entre la séquence de valeurs mesurées et la séquence de valeurs limites indiquant une formation trop importante et/ou trop faible d'oxydes d'azote.

4. Procédé selon les revendications 1, 2 ou 3, dans lequel, en cas de différence entre la séquence de valeurs mesurées et la séquence de valeurs limites dépassant une tolérance admissible, on agit sur la courbe de dégagement de chaleur pour le cycle de combustion suivant pour que, en cas de formation amplifiée d'oxydes d'azote, la courbe de dégagement de chaleur aboutisse à une formation réduite d'oxydes d'azote pendant le cycle de combustion suivant, et pour qu'en cas de formation réduite d'oxydes d'azote la courbe de dégagement de chaleur aboutisse à une formation amplifiée d'oxydes d'azote pendant le cycle de combustion suivant.

5. Procédé selon une des revendications précédentes, dans lequel la séquence de valeurs mesurées correspond à une séquence des premières valeurs de conductivité du gaz du combustion produit pendant le cycle de combustion, qui est établie de préférence sur la base des particules chargées négativement contenues dans le gaz de combustion.

6. Procédé selon une des revendications précédentes, dans lequel une séquence de valeurs limites est prédéfinie pour être comparée à la séquence de valeurs mesurées, les deux valeurs à comparer l'une à l'autre étant apparues à des conditions aux limites du cycle de combustion au moins à peu près identiques.

7. Procédé selon la revendication 6, dans lequel la séquence de valeurs limites correspond à une séquence de deux valeurs de conductivité du gaz de combustion produit pendant le cycle de production, établie sur la base des particules chargées positivement contenues dans le gaz de combustion.

8. Procédé selon la revendication 6, dans lequel la séquence de valeurs limites est sélectionnée à partir d'une pluralité de valeurs limites mises en mémoire en fonction des conditions aux limites du cycle de combustion pendant lequel on détermine et/ou on a déterminé la séquence de valeurs mesurées.

9. Procédé selon une des revendications précédentes, dans lequel la part d'oxydes d'azote est déterminée pendant le cycle de combustion surveillé par un capteur de détection de l'oxyde d'azote, qui fournit, sous forme de séquence de valeurs mesurées la part d'oxydes d'azote détectée pendant le cycle de combustion.

10. Procédé selon une des revendications précédentes, dans lequel on détermine la conductivité du gaz de combustion produit pendant le cycle de combustion suivant, et dans lequel les valeurs de conductivité obtenues pendant le cycle de combustion suivant sont comparées pour contrôle à la valeur limite et/ou la séquence de valeurs limites.

11. Procédé selon la revendication 10, dans lequel les valeurs de conductivité obtenues pendant le cycle de combustion suivant sont obtenues sur la base de la détermination de la part de particules chargées positivement dans le gaz de combustion.

12. Procédé selon une des revendications précédentes, dans lequel on agit sur la courbe de dégagement de chaleur par un refroidissement ciblé de la chambre de combustion, par une modification du volume de remplissage et/ou de la durée de remplissage du carburant fossile et/ou par recirculation du gaz d'échappement.

13. Procédé selon une des revendications précédentes, dans lequel les valeurs mesurées sont détectées pendant un cycle de combustion pour au moins un cylindre d'un moteur à combustion interne.

14. Procédé selon la revendication 13, dans lequel on modifie le moment d'injection, la quantité de carburant injecté et/ou la courbe d'injection pour agir sur la courbe de dégagement de chaleur.

15. Procédé selon la revendication 13 ou 14, dans lequel on refroidit le cylindre pour agir sur la courbe de dégagement de chaleur dans le cylindre.

16. Procédé selon la revendication 13, 14 ou 15, dans lequel le gaz d'échappement qui a été produit pendant un cycle de combustion précédent est au moins partiellement redirigé vers le cylindre pour agir sur la courbe de dégagement de chaleur.

17. Procédé selon l'une quelconque des revendications précédentes, dans lequel les valeurs mesurées affectées à la pré-injection et à l'injection principale sont comparées à une série de valeurs limites.
